# EUROPÄISCHE PATENTSCHRIFT

(11) **EP 0 499 583 B1**
(45) Veröffentlichungstag und Bekanntmachung des Hinweises auf die Patenterteilung: **02.11.1995**
(21) Anmeldenummer: 92810081.7
(22) Anmeldetag: 06.02.1992
(51) Int. Cl.: G01K 17/06

(54) **Verfahren und Gerätschaft zur Verbrauchsermittlung**
Method and device for consumption determination
Méthode et appareil pour déterminer la consommation

(30) Priorität: 15.02.1991 CH 482/91
(43) Veröffentlichungstag der Anmeldung: 19.08.1992
(73) Patentinhaber: FRITZ GEGAUF AG BERNINA-NÄHMASCHINENFABRIK, CH-8266 Steckborn (CH)
(72) Erfinder: Hausammann, Erich, CH-8272 Ermatingen (CH)
(74) Vertreter: AMMANN PATENTANWAELTE AG BERN

(56) Entgegenhaltungen:
- DE-A- 3 435 224
- DE-A- 3 514 412
- DE-A- 3 535 869
- DE-U- 8 813 323
- US-A- 4 473 307
- IKZ HAUSTECHNIK SANITAR, HEIZUNG KLIMA ELEKTRO. Bd. 13, 1985, ARNSBERG DE Seiten 24 - 25; 'HEIZ- UND WARMWASSERKOSTENABRECHNUNG'

## Beschreibung

Die vorliegende Erfindung betrifft ein Verfahren und eine Gerätschaft zur Verbrauchsermittlung mehrerer Verbraucher mit je mehreren Verbrauchsstellen und/oder Verbrauchsarten, gemäss Oberbegriff des Anspruchs 1 bzw. des Anspruchs 5. Die DE-A-34 35 224 betrifft ein Verfahren und eine Gerätschaft dieser Art. Das Auslesen der Zählerstände mittels des Lesegerätes muss hierbei durch eine befugte Person erfolgen oder per Funk übermittelt werden, was mit verschiedenen Nachteilen verbunden ist. Trotz des erheblichen Aufwandes an Arbeitszeit und der Notwendigkeit, der befugten Person Zutritt zu allen Wohnungen zu verschaffen, in welchen die Zählerstände an verschiedenen Heizkörpern abzulesen sind, bzw. des Aufwandes an Uebermittlungsgeräten, besteht keine Gewähr dafür, dass die Ablesung vollständig und korrekt erfolgt.

Ziel vorliegender Erfindung ist es, die Erfassung der Verbrauchsdaten derart sicherzustellen, dass Irrtümer oder bewusste Fehlablesungen ausgeschlossen werden und dass somit das Auslesen der Daten durch den Verbraucher selbst erfolgen kann, derart, dass eine Ablesung durch eine befugte Person unnötig wird. Dieses Ziel wird insbesondere gemäss den Ansprüchen 1 bzw. 6 erreicht.

Die Erfindung wird nun anhand eines in der Zeichnung dargestellten Ausführungsbeispiels der erfindungsgemässen Gerätschaft und anhand verschiedener Varianten näher erläutert.
Figur 1 zeigt eine Seitenansicht eines Messgerätes,
Figur 2 zeigt eine Draufsicht auf das Messgerät,
Figur 3 zeigt eine Draufsicht auf das Messgerät bei zum Auslesen von Daten geöffnetem Deckel,
Figur 4 zeigt eine schematische Seitenansicht des an einem Heizkörper angebrachten Messgerätes,
Figur 5 zeigt eine Ansicht des Lese- und Anzeigegerätes,
Figur 6 zeigt das auf das Messgerät aufgesteckte Lese- und Anzeigegerät
und Figur 7 zeigt das Lese- und Anzeigegerät als Raumthermometer mit einem Halter verbunden.

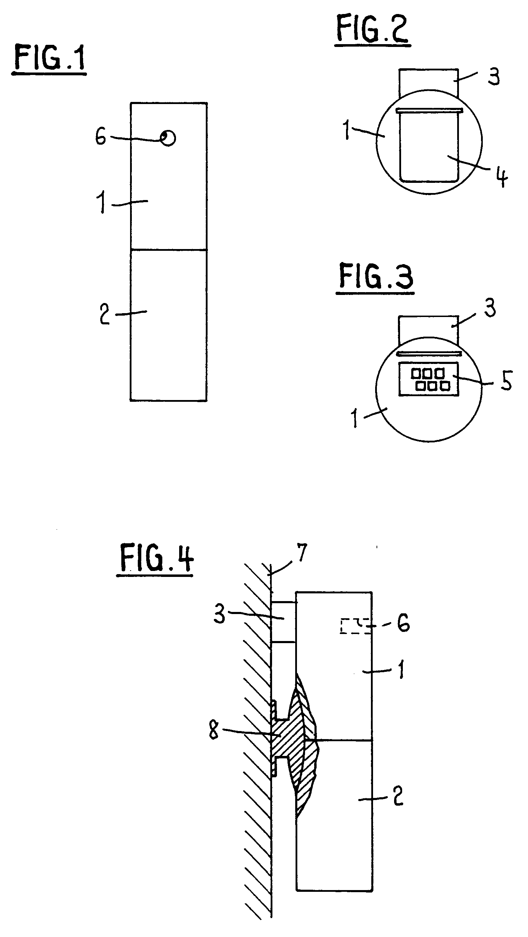

Das in den Figuren 1 - 4 dargestellte Messgerät weist eine eigentliche Messeinheit 1 und ein damit verbundenes Batteriefach 2 auf. Gemäss den Figuren 2 und 3 weist das Gehäuse der Teile 1 und 2 zylindrische Form auf mit einem Fortsatz 3 als Heizkörpersensor. An der Oberseite weist die Messeinheit 1 einen wegnehmbaren oder aufklappbaren Deckel 4 auf, der eine Steckbuchse 5 zum Anschluss eines unten beschriebenen Lesegerätes schützt. An der Vorderseite der Messeinheit 1 befindet sich ein Temperaturfühler 6 zur Erfassung der Raumtemperatur.

Das Messgerät 1,2 wird gemäss Figur 4 mittels eines an einem Heizkörper 7 festgeklebten und plombierten Halters 8 derart befestigt, dass es durch Unbefugte nicht entfernt oder auch nur in seiner Lage verändert werden kann.

Zur Erfassung der insgesamt bezogenen Heizenergie, bzw. zur Erstellung einer individuellen Heizkostenabrechnung, wird nun jeder Heizkörper beispielsweise einer Wohnung, eines Büros oder irgendeines Verbrauchers, mit einem Gerät gemäss Figuren 1 - 4 versehen. Die Messeinheiten 1 sind mit einem Mikroprozessor bestückt, der dauernd durch die im Batteriefach 2 vorhandenen Batterien gespeist wird. Er ist so programmiert, dass er gestützt auf die Temperaturdifferenz zwischen der erfassten Oberflächentemperatur des Heizkörpers an der Befestigungsstelle und einer angenommenen Bezugs-Raumtemperatur von beispielsweise 20 °C eine Wärmeabgabe durch den Heizkörper errechnet. Dieser Verbrauch wird beispielsweise alle vier Minuten erfasst und in einem Zähler aufaddiert, derart, dass nach einer bestimmten Erfassungszeit, beispielsweise nach einem Monat oder einem Vierteljahr, der Zählerstand der durch den Heizkörper abgegebenen Energie entspricht. Es werden dann alle Zählerstände eines bestimmten Verbrauchers, also beispielsweise aus einer bestimmten Wohnung addiert, um den Gesamtverbrauch zu ermitteln und eine Abrechnung zu erstellen. Dabei ist vorgesehen, die Messeinheit erst ab einer bestimmten erfassten Oberflächentemperatur des Heizkörpers, beispielsweise 31 °C oder aber einer bestimmten Differenz zwischen der Oberflächentemperatur des Heizkörpers und der durch den Fühler 6 erfassten Raumtemperatur von beispielsweise 2 - 4 °C zu aktivieren.

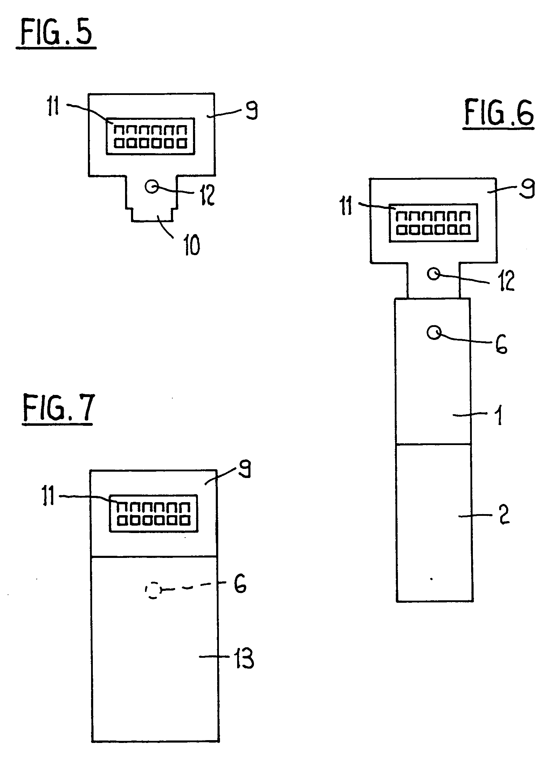

Um die in der Messeinheit 1 in einem bestimmten Zeitraum aufaddierten Werte auszulesen, ist ein Lese- und Anzeigegerät gemäss Figur 5 vorgesehen. Dieses Gerät 9 weist einen Stecker 10 auf, der in die Buchse 5 jeder Messeinheit 1 eingeführt werden kann, und es ist mit einer beispielsweise sechsstelligen LCD-Anzeige 11 versehen. Das Gerät 9 weist ferner einen Temperatursensor 12 auf, mittels dem die Raumtemperatur erfasst und auf der Anzeige 11 angezeigt werden kann. Das Gerät 9 ist ebenfalls mit einem Mikroprozessor ausgerüstet.

Wie erwähnt, wird das Gerät 9 zum Auslesen des Zählerstandes aus einer bestimmten Messeinheit 1 gemäss Figur 6 auf dieselbe aufgesteckt, womit die Uebertragung von Daten aus der Messeinheit 1 in das Gerät 9 aktiviert wird und die Daten im Gerät 9 abgespeichert werden. Dabei wird beispielsweise sowohl der Zählerstand der Messeinheit 1 als auch ein Code, welcher diese Einheit bzw. den Heizkörper, an welchem sie angebracht ist, bezeichnet, in einen Speicher des Lesegerätes 9 übertragen. Zugleich wird der ausgelesene Zählerstand durch die Anzeige 11 angezeigt, so dass der Verbraucher, beispielsweise der Wohnungsmieter, diesen Zählerstand sogleich zur Kenntnis nehmen kann. Wird in einem späteren Zeitpunkt das Lesegerät 9 wieder mit derselben Messeinheit 1 verbunden, bleibt der zugeordnete Code gespeichert und der entsprechende Speicher des Gerätes 9 nimmt den neuen Zählerstand auf. An einem bestimmten Stichtag sind nun alle vorhandenen Messeinheiten 1 in der soeben beschriebenen Weise auszulesen. Im Gerät 9 sind dann die Zählerstände aller vorhandenen Messeinheiten 1 mit den zugeordneten Codes abgespeichert. Diese abgespeicherten Daten müssen nun vollständig an eine Verrechnungstelle mit einem zentralen Rechner übermittelt werden, entweder indem das Gerät 9 an die Verrechnungsstelle eingesandt wird, wo die Daten ausgelesen werden, indem ein Datenträger aus dem Gerät 9 entnommen und eingesandt wird oder indem die abgespeicherten Daten über ein entsprechendes Modem und die Telefonleitung an die Verrechnungsstelle übermittelt werden. An der Verrechnungstelle werden die eingegangen Daten vorerst auf ihre Richtigkeit überprüft, d.h. es wird festgestellt, ob für alle bei einem bestimmten Verbraucher installierten Messeinheiten der entsprechende Code sowie ein Zählerstand vorliege. Wenn dies nicht der Fall ist, muss die Ablesung wiederholt und dann erneut überprüft und ausgewertet werden. Zur Auswertung erfolgt eine Addition aller Zählerstände.

Es bestehen allerdings auch andere Möglichkeiten zur Absicherung gegen Irrtum oder Betrug. Es kann beispielsweise sein, dass der Mikroprozessor des Lesegerätes 9 derart programmiert ist, dass er überprüft, ob alle Messeinheiten 1 korrekt ausgelesen worden sind. In diesem Falle kann im Messgerät 9 selbst die Summe der einzelnen Zählerstände gebildet und diese Summe an die Verrechnungsstelle übermittelt werden, an welcher keine Ueberprüfung auf Richtigkeit mehr zu erfolgen braucht.

Gemäss Figur 7 kann das Lesegerät 9 bei Nichtgebrauch vorzugsweise in einen Wandhalter 13 gesteckt werden und dabei die durch den Fühler 6 erfasste Raumtemperatur anzeigen. Im Halter 13 kann eine Batterie untergebracht sein, welche das Gerät 9 speist. Dieses Gerät braucht somit keine Batterie zu enthalten, da es beim Betriebszustand gemäss Figur 6, d.h. beim Auslesen von Daten aus den Messeinheiten 1, aus diesen Messeinheiten bzw. deren Batterie, gespeist werden kann, während es bei Verwendung als Thermometer gemäss Figur 7 durch die Batterien des Halters 13 gespeist werden kann. Dieses Gerät kann somit besonders klein ausgeführt werden, sodass es als Datenträger an die Verrechnungsstelle eingesandt werden kann.

Es sind verschiedene Ausführungsvarianten möglich. Es kann beispielsweise ein Kabel vorgesehen sein, das entweder fest oder steckbar mit dem Lesegerät verbunden ist und mit einem Stecker zur Verbindung mit den Messeinheiten 1 versehen sein kann. Damit wird es noch leichter möglich, Messeinheiten an schwer zugänglichen Stellen anzubringen, an welchen das Lesegerät 9 nicht mehr aufgesteckt werden könnte.

Das obenstehende Ausführungsbeispiel ist ausschliesslich bezüglich der Erfassung der konsumierten Heizenergie, bzw. einer individuellen Heizkostenabrechnung beschrieben worden. Der eingangs erwähnte Missstand, wonach befugte Personen Verbrauchszähler, beispielsweise Elektrizitäts,- Wasserzähler oder Gaszähler abzulesen haben, könnte gemäss dem erfindungsgemässen Verfahren, bzw. mit Hilfe der erfindungsgemässen Gerätschaft, auch behoben werden. Es bedarf keiner näheren Erläuterung darüber, dass mit Hilfe des Lesegerätes 9 auch andere Zählerstände ausgelesen werden könnten, sofern dieselben nur in geeigneter lesbarer Form vorliegen. Es wäre dabei selbst möglich, für einen bestimmten Verbraucher alle Zählerstände mit ein und demselben Gerät abzulesen, wobei jedem Zählerstand in oben beschriebener Weise ein Code zugeordnet ist, welcher den einzelnen Zähler bezeichnet. An einer zentralen Verrechnungstelle könnte dann festgestellt werden, wie hoch der Verbrauch der einzelnen Energien Wasser oder dergleichen war, und es könnte eine generelle Kostenabrechnung erstellt werden.

Eine weitere Absicherung gegen jede Betrugsmöglichkeit kann darin bestehen, dass die Programmierung sowohl der Messeinheit 1 als auch des Lesegerätes 9 über eine trennbare Verbindung erfolgt, die nur nach dem Aufbrechen einer Plombierung wieder erstellt werden kann, um den einen oder anderen Teil der Gerätschaft neu zu programmieren.

Die beschriebene Gerätschaft eignet sich ganz besonders zur Nachrüstung bestehender Heizsysteme, indem lediglich das Problem besteht, die Messeinheit 1 zweckmässig an einem beliebigen bestehenden Heizkörper anzubringen und die Oberflächentemperatur zu erfassen. Beim Ausführungsbeispiel ist angenommen, der Temperatursensor 3 sei fest an der Messeinheit 1 angebracht. Er könnte allerdings auch verstellbar angeordnet sein oder aber es könnte ein über ein Kabel beweglich mit der Messeinheit verbundener Temperatursensor vorgesehen sein, damit er auch in extremen Fällen korrekt an einer geeigneten Stelle eines Heizkörpers angebracht werden kann.

Es ist oben erwähnt worden, dass der Zählerstand beliebiger Messeinheiten zu beliebigen Zeiten durch Aufstekken des Lesegerätes 9 angezeigt werden kann, um den Verbrauch in einem beliebigen Zeitpunkt zu überprüfen. In diesem Falle darf natürlich keine Rückstellung des Zählerstandes in der Messeinheit erfolgen. Es ist jedoch auch möglich, ein Auslesen der Zählerstände nur an einem Stichtag oder in einer zu bestimmenden Stichperiode zu erlauben und in diesem Falle nach jedem Auslesen eines Zählerstandes den Zähler der Messeinheit 1 auf Null zurückzustellen.

Zur weiteren Sicherstellung bzw. Ueberprüfung der Korrektheit der Ablesung kann ausser den oben erwähnten Daten auch ein Zeitcode gespeichert werden, aus dem der Zeitpunkt der Ablesung an jeder Verbrauchsstelle ermittelt werden kann. Da jede Messeinheit ohnehin eine Zeitbasis, vorzugsweise einen quarzgesteuerten Taktgeber, aufweisen muss, um die periodische Messwerterfassung zu steuern, ist mit der Bereitstellung und dem Auslesen eines Zeitcodes kein erheblicher zusätzlicher Aufwand verbunden.

Die Zuverlässigkeit der Messung hängt natürlich auch von einer zuverlässigen Stromversorgung der Messeinheiten ab. Einerseits kann das Batteriefach plombiert sein, um jede unbefugte Manipulation an den Batterien zu vermeiden bzw. feststellen zu können. Andererseits können Solarzellen vorgesehen sein, welche die Stromversorgung unterstützen oder ganz übernehmen. Es wäre in diesem Zusammenhang auch möglich, mit den übrigen Daten jeweils Daten über den Betriebszustand der Messeinheit bereitzustellen und auszulesen, beispielsweise über den Ladezustand der Batterie.

## Patentansprüche

1. Verfahren zur Verbrauchsermittlung mehrerer Verbraucher mit je mehreren Verbrauchsstellen und/oder Verbrauchsarten, wobei jeder Verbrauchsstelle und/oder Verbrauchsart jedes Verbrauchers ein Zähler zugeordnet wird und der Stand aller Zähler jedes Verbrauchers ausgelesen wird, indem ein Lesegerät (9) nacheinander mit jedem Zähler verbunden wird, wobei Daten über den so ermittelten Verbrauch an eine zentrale Verrechnungsstelle übermittelt und dort ausgewertet werden, dadurch gekennzeichnet, dass bei jedem Verbraucher mittels eines ihm zugeordneten Lesegerätes (9) die Stände seiner Zähler ausgelesen und damit der Verbrauch in sein Lesegerät (9) eingespeichert wird, wobei zwischen den Zählern und dem Lesegerät (9) eine Verriegelung derart vorgesehen ist, dass ein gültiges Ergebnis nur vorliegt, wenn ein Verbraucher jeden ihm zugeordneten Zähler einmal ausgelesen hat.

2. Verfahren nach Anspruch 1, dadurch gekennzeichnet, dass das Lesegerät oder ein mit demselben verwendbarer Datenträger an die Verrechnungsstelle Übermittelt wird.

3. Verfahren nach Anspruch 1 oder 2, dadurch gekennzeichnet, dass verschiedenartiger Verbrauch, zum Beispiel von Heiz- oder Warmwasser, Gas, Elektrizität, nach entsprechenden Bemessungsschlüsseln gezählt und mit ein und demselben Lesegerät erfasst wird.

4. Verfahren nach einem der Ansprüche 1 - 3, dadurch gekennzeichnet, dass jeder Verbrauchsstelle ein bezeichnender Code zugeordnet wird und dass mit dem Lesegerät jeweils jeder Code und der zugeordnete Zählerstand getrennt ausgelesen und gespeichert und an die Verrechnungsstelle übermittelt wird, worauf in der Verrechnungsstelle die Vollständigkeit der Daten überprüft und der Gesamtverbrauch ermittelt wird.

5. Gerätschaft zur Verbrauchsermittlung eines Verbrauchers mit mehreren Verbrauchsstellen und/oder Verbrauchsarten, wobei jeder Verbrauchsstelle und/oder Verbrauchsart ein Zähler zugeordnet ist, mit dem ein den Zählerstand auslesendes Lesegerät (9) verbindbar ist, dadurch gekennzeichnet, dass die Zähler und das Lesegerät (9) derart programmiert sind, dass im Lesegerät (9) nur eine als korrekt qualifizierte Grösse gespeichert wird, wenn der Stand aller Zähler erfasst und summiert worden ist.

6. Gerätschaft nach Anspruch 5, dadurch gekennzeichnet, dass jeder Zähler mit einem Code gekennzeichnet ist, der bei der Verbindung mit dem Auslesegerät ausgelesen wird, wobei das Auslesegerät eine "Korrekt"-Information speichert, wenn es den Code jedes Zählers einmal ausgelesen hat.

7. Gerätschaft etwa nach Anspruch 5, dadurch gekennzeichnet, dass das Lesegerät Speicher für je einen Code und einen Zählerstand jeder Verbrauchsstelle bzw. Verbrauchsart aufweist, und dass ein Rechner an der Verrechnungsstelle vorgesehen ist, der die Vollständigkeit und Richtigkeit der in den Speichern enthaltenen Codes und zugeordneten Zählerständen zu überprüfen und als korrekt bestätigte Zählerstände zu addieren geeignet ist.

8. Gerätschaft, insbesondere nach einem der Ansprüche 5 - 7, dadurch gekennzeichnet, dass die Zähler über eine unterbrechbare Verbindung programmierbar sind.

9. Gerätschaft, insbesondere nach einem der Ansprüche 5 bis 8, dadurch gekennzeichnet, dass die Zähler für eine periodische Messwerterfassung, zum Beispiel in Intervallen von 4 Min., ausgelegt sind.

10. Gerätschaft, insbesondere nach einem der Ansprüche 7 bis 9, dadurch gekennzeichnet, dass die Zähler je einen Fühler zum Erfassen einer Heizkörper- oder Warmwassertemperatur und einer Umgebungstemperatur aufweisen und sich beim Ueberschreiten einer bestimmten Temperaturdifferenz oder beim Ueberschreiten einer bestimmten Geschwindigkeit des Temperaturanstiegs einschalten.

11. Gerätschaft nach einem der Ansprüche 5 bis 10, dadurch gekennzeichnet, dass ein stationär montierter Halter für das Lesegerät mit einer Stromversorgung für dasselbe vorgesehen ist, und dass das Lesegerät eine Anzeige für die Raumtemperatur aufweist.

## Claims

1. A method for the determination of the consumption of a plurality of consumers having each a plurality of consumer's installations and/or kinds of consumption, a counter being associated to each installation and/or mode of consumption of each consumer, and the count of all counters of each consumer being read out by successively connecting a reading device to each of the counters, the data referring to the consumption determined in this manner being transmitted to a central processing center where they are evaluated, characterised in that the counts of the counters of each consumer are read out by means of a reading device (9) which is associated to said consumer, whereby the consumption is stored in said associated reading device (9), the counters and the reading device being interlocked in such a manner that a valid result is only provided if a consumer has read out each associated counter once.

2. Method according to claim 1, characterised in that said reading device or a storage medium which is used therewith is transmitted to said processing center.

3. Method according to claim 1 or 2, characterised in that consumptions of different kinds, e.g. of heating or hot water, gas, electricity, are counted according to different rates and determined by one and the same reading device.

4. Method according to any one of claims 1 to 3, characterised in that a designating code is associated to each consumer's installation, and in that each code and the count of its associated counter are separately read out, stored, and transmitted to said processing center, whereupon the data are checked for completeness and the total consumption is determined.

5. Equipment for the determination of the consumption of a consumer having a plurality of consumer's installations and/or kinds of consumption, each installation having an associated counter to which a reading device (9) can be connected in order to read out its count, characterised in that said counters and said reading device (9) are programmed in such a manner that a value which qualifies as correct is stored in said reading device (8) only if the count of all counters has been recorded and summed up.

6. Equipment according to claim 5, characterised in that each counter is designated by a code which is read out when said reading device is connected, said reading device storing a "correct" information if the code of each counter has been read out once.

7. Equipment, substantially according to claim 5, characterised in that said reading device is provided with respective memories for a code and a count of each installation resp. kind of consumption, and in that a computer is provided in said processing center which is capable of verifying the completeness and accuracy of the codes and the associated counter counts stored in said memories and of summing them up as confirmed counter counts.

8. Equipment, particularly according to one of claims 5 to 7, characterised in that said counters are capable of being programmed by a disruptable connection.

9. Equipment, particularly according to one of claims 5 to 8, characterised in that the counters are designed for a periodical detection of measures, e.g. at intervals of 4 min.

10. Equipment, particularly according to one of claims 7 to 9, characterised in that the counters have a respective sensor for the detection of a radiator or heating water temperature and of an ambient temperature and are switched on when a certain temperature difference or a certain speed of the temperature rise is exceeded.

11. Equipment according to any one of claims 5 to 10, characterised in that a stationary holder having a power supply is provided for said reading device, and in that said reading device has a display for the room temperature.

## Revendications

1. Procédé pour déterminer la consommation d'une pluralité de consommateurs ayant chacun une pluralité d'installations et/ou types de consommation, un compteur étant associé à chaque installation et/ou à chaque type de consommation de chaque consommateur, et la position de tous les compteurs de chaque consommateur étant relevée en reliant successivement un appareil de lecture (9) à chacun desdits compteurs, les données sur la consommation ainsi relevées étant transmises à un centre de calcul où elles sont évaluées, caractérisé en ce que les positions des compteurs de chaque consommateur sont relevées à l'aide d'un appareil de lecture (9) associé à ce dernier et que la consommation est ainsi enregistrée dans son appareil de lecture (9), les compteurs et l'appareil de lecture étant verrouillés de telle manière qu'un résultat valable n'est obtenu que lorsqu'un consommateur a relevé chacun de ses compteurs associés une fois.

2. Procédé selon la revendication 1, caractérisé en ce que l'appareil de lecture ou un support de données utilisable avec celui-ci est transmis audit centre de calcul.

3. Procédé selon la revendication 1 ou 2, caractérisé en ce que différents types de consommation, par exemple en eau de chauffage ou eau chaude, gaz, électricité, sont comptés selon différentes clés de taxation et sont déterminés par un même appareil de lecture.

4. Procédé selon l'une quelconque des revendications 1 à 3, caractérisé en ce qu'un code de désignation est associé à chaque installation de consommation, et que chaque code et la position associée du compteur sont chaque fois séparément relevés et enregistrés et transmis audit centre de calcul où l'état complet des données est vérifié et la consommation totale est déterminée.

5. Dispositif pour déterminer la consommation d'un consommateur ayant une pluralité d'installations et/ou de types de consommation, un compteur capable d'être relié à un appareil de lecture (9) qui relève la position du compteur étant associé à chaque installation et/ou à chaque type de consommation, caractérisé en ce que les compteurs et l'appareil de lecture (9) sont programmés de telle manière qu'une valeur qualifiée comme correcte n'est enregistrée dans l'appareil de lecture (9) que lorsque la position de tous les compteurs a été relevée et totalisée.

6. Dispositif selon la revendication 5, caractérisé en ce que chaque compteur est désigné par un code qui est lu lorsqu'il est relié à l'appareil de lecture, l'appareil de lecture enregistrant une information "correct" dès qu'il a lu le code de chaque compteur une fois.

7. Dispositif, particulièrement selon la revendication 5, caractérisé en ce que l'appareil de lecture présente des mémoires pour un code et une position du compteur de chaque installation resp. de chaque type de consommation, et qu'un ordinateur est prévu au centre de calcul qui est en mesure de vérifier l'état complet et l'exactitude des codes et des positions de compteur mémorisés dans lesdites mémoires et de les totaliser en tant que positions de compteur confirmées.

8. Dispositif, particulièrement selon l'une des revendications 5 à 7, caractérisé en ce que les compteurs sont programmables par une liaison interruptible.

9. Dispositif, particulièrement selon l'une des revendications 5 à 8, caractérisé en ce que les compteurs sont construits pour une détection périodique des valeurs à mesurer, par exemple en intervalles de 4 min.

10. Dispositif selon l'une quelconque des revendications 7 à 9, caractérisé en ce que les compteurs présentent chacun une sonde pour la détection d'une température du radiateur ou de l'eau de chauffage et d'une température ambiante, et qu'ils s'enclenchent lorsqu'une différence de température donnée ou une vitesse de montée donnée de la température est dépassée.

11. Dispositif selon l'une quelconque des revendications 5 à 10, caractérisé en ce qu'un soutien stationnaire de l'appareil de lecture présentant une alimentation de ce dernier est prévu, et que l'appareil de lecture présente un affichage de la température ambiante.
